# EUROPEAN PATENT APPLICATION

(11) **EP 2 045 760 A2**
(43) Date of publication of application: **08.04.2009**
(21) Application number: 08017391.7
(22) Date of filing: 02.10.2008
(51) Int. Cl.: G06K 9/00

(54) **Face authenticating apparatus, face authenticating method and face authenticating system**

(30) Priority: 04.10.2007 JP 2007261316
(71) Applicant: Kabushiki Kaisha Toshiba, Minato-ku, Tokyo 105-8001 (JP)
(72) Inventor: Dobashi, Hironori, Tokyo 105-8001 (JP)
(74) Representative: HOFFMANN EITLE

(57) **Abstract**

The face authenticating apparatus (10) obtains the facial image of the pedestrian M before the pedestrian M approaches the camera (11). The face authenticating apparatus (10) performs the face authentication based on the obtained image and the feature information which is previously stored as the dictionary information. When the face authentication is unsuccessful, the face authenticating apparatus (10) receives operational input from the pedestrian M by prompting the pedestrian M to operate the operating unit (13) which is installed near the door (3). The face authenticating apparatus (10) performs the authentication of the pedestrian M based on the inputted operational input. When the authentication result is OK, the face authenticating apparatus (10) performs registration or updating based on the facial image which is obtained before the pedestrian M approaches the door (3).

## Description

The present invention relates to a face authenticating apparatus, a face authenticating method and a face authenticating system which obtain a facial image of an authentication target person and perform authentication based on the obtained facial image, for example.

Generally, a face authenticating system which uses a face authenticating apparatus has a camera, such as a video camera and the like. When a person such as an authentication target stands in front of the camera and faces towards the lens of the camera, the camera takes a facial image of the person. The camera inputs the taken image to the face authenticating apparatus.

The face authenticating apparatus extracts facial feature information which is inherent to the authentication target person from the inputted image. Further, the face authenticating apparatus previously stores facial feature information of people who are permitted to be authenticated as dictionary information. The face authenticating apparatus compares the feature information which is extracted from the facial image of the authentication target person with the dictionary information. Accordingly, the face authenticating apparatus determines whether or not the authentication target person is the person who has permission to be authenticated.

With a face authenticating apparatus which is disclosed in Jpn. Pat. Appln. KOKAI Publication No. 2001-266152, for example, when the authentication target person is determined as a person who has permission to be authenticated, a door for access to an access target area, such as a room, a facility or the like, is opened.

In order to improve the convenience for users, a face authenticating apparatus which can perform the face authentication without the authentication target standing in front of a camera is desired. Therefore, the face authenticating apparatus needs to obtain a facial image of a person who is walking (a person who is moving).

However, the abovementioned face authenticating apparatus takes a facial image of a person when the person to be authenticated stands in front of the camera. Namely, in the case that the authentication target is a person walking (a person moving), the face authenticating apparatus cannot obtain the facial image until the authentication target approaches a door. Therefore, the face authenticating apparatus cannot perform the face authentication until the authentication target approaches the door.

According to one embodiment of the invention, an object of the present invention is to provide a face authenticating apparatus, a face authenticating method and a face authenticating system which can greatly improve user's convenience.

In order to attain the above object, in the embodiment of the invention, a face authenticating apparatus of the present invention comprises dictionary storing unit for previously storing dictionary information, operating unit for receiving operational input, image taking unit for taking an image including at least a face of a person, face detecting unit for detecting a facial area of the person from the image which is taken by the image taking unit, authenticating unit for determining whether or not the person is a previously registered person based on the image of the facial area which is detected by the face detecting unit and the dictionary information which is stored in the dictionary storing unit, and dictionary registering unit for performing registration or updating of the dictionary information which is stored in the dictionary storing unit based on the facial image of the person who is detected by the face detecting unit in the case that the person is determined not to be the previously registered person by the authenticating unit and specific operational input is performed by the operating unit.

Further, a face authenticating method of the present invention is the face authenticating method using the face authenticating apparatus which comprises dictionary storing unit for previously storing dictionary information and operating unit for receiving operational input, and the method comprises taking an image including at least a face of a person, detecting a facial area of the person from the taken image, determining whether or not the person is a previously registered person based on the image of the detected facial area and the dictionary information which is stored in the dictionary storing unit, and performing registration or updating of the dictionary information which is stored in the dictionary storing unit based on the facial image of the detected person in the case that the person is determined not to be the previously registered person and specific operational input is performed by the operating unit.

Furthermore, a face authenticating system of the present invention comprises dictionary storing unit for previously storing dictionary information, operating unit for receiving operational input, image taking unit for taking an image including at least a face of a person, face detecting unit for detecting a facial area of the person from the image which is taken by the image taking unit, authenticating unit for determining whether or not the person is a previously registered person based on the image of the facial area which is detected by the face detecting unit and the dictionary information which is stored in the dictionary storing unit, dictionary registering unit for performing registration or updating of the dictionary information which is stored in the dictionary storing unit based on the facial image of the person who is detected by the face detecting unit in the case that the person is determined not to be the previously registered person by the authenticating unit and specific operational input is performed by the operating unit, gate controlling unit for controlling open-close of a gate for entrance and exit disposed at an access target area based on the determination result of the authenticating unit, information managing unit for storing the determination result of the authenticating unit, the image utilized for the face authentication, the processing result of the dictionary registering unit and the control result of the gate controlling unit, as history information, and system managing unit for performing searching and outputting of the history information stored in the information managing unit and transmitting of a remote open-close controlling signal of the gate for entrance and exit to the gate controlling unit.

According to an embodiment of the invention, a face authenticating apparatus, a face authenticating method and a face authenticating system which can greatly improve user's convenience can be provided.

The invention can be more fully understood from the following detailed description when taken in conjunction with the accompanying drawings, in which:
FIG. 1 is a block diagram which generally shows a structure example of a face authenticating apparatus and a face authenticating system according to an embodiment of the present invention;
FIG. 2 is a pattern diagram which explains an installation example of the face authenticating apparatus shown in FIG. 1;
FIG. 3 is a diagram which generally shows a structure example of the face authenticating apparatus shown in FIG. 1;
FIG. 4A is a diagram for explaining a screen example which is displayed at a face authentication displaying unit of the face authenticating apparatus shown in FIG. 1;
FIG. 4B is a diagram for explaining a screen example which is displayed at the face authentication displaying unit of the face authenticating apparatus shown in FIG. 1;
FIG. 4C is a diagram for explaining a screen example which is displayed at the face authentication displaying unit of the face authenticating apparatus shown in FIG. 1;
FIG. 4D is a diagram for explaining a screen example which is displayed at the face authentication displaying unit of the face authenticating apparatus shown in FIG. 1;
FIG. 5A is a diagram for explaining a view angle adjustment direction of a camera of the face authenticating apparatus shown in FIG. 1;
FIG. 5B is a diagram for explaining a view angle adjustment direction of the camera of the face authenticating apparatus shown in FIG. 1;
FIG. 5C is a diagram for explaining a view angle adjustment direction of the camera of the face authenticating apparatus shown in FIG. 1;
FIG. 6 is a diagram for explaining an example in which a facial area is detected;
FIG. 7 is a flowchart for explaining a process of the face authenticating apparatus shown in FIG. 1; and
FIG. 8 is a flowchart for explaining a process of the face authenticating apparatus shown in FIG. 1.

In the following, a face authenticating apparatus, a face authenticating method and a face authenticating system according to an embodiment of the present invention are explained in detail with reference to the drawings.

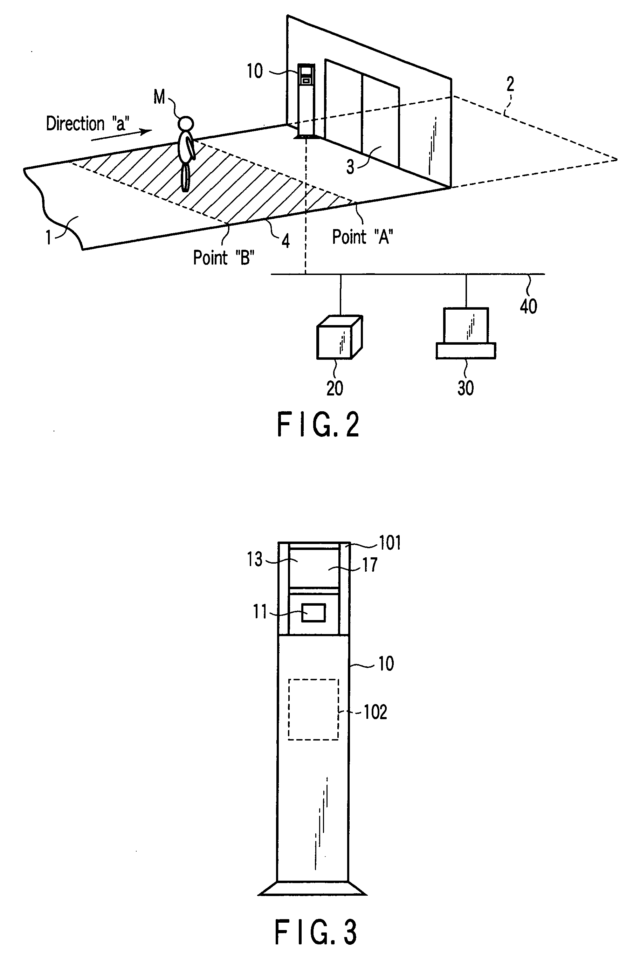

Firstly, an outline of an embodiment of the present invention is briefly explained. As shown in FIG. 2, it is assumed that a pedestrian (a person) M is moving in a passage zone 1 in the direction of an arrow "a" shown in the figure.

A face authenticating apparatus according to the embodiment of the present invention uses a camera to take an image of a face of the pedestrian M who approaches towards a door 3 (a gate for entrance and exit) which is set at an access target area 2, such as a room or a facility etc. where access of people is restricted. Specifically, when the pedestrian M exists between point "B" and point "A" of the passage zone 1, the face authenticating apparatus takes an image by the camera, the image including at least the face of the pedestrian M.

The face authenticating apparatus determines whether or not the pedestrian M according to the image which is taken by the camera is a person who is previously registered during moving of the pedestrian M from point "A" to the door 3. In the case that the pedestrian M is determined to be a person who is previously registered, the face authenticating apparatus controls the door 3 to open.

Here, the diagonally shaded area in FIG. 2, namely, the area between point "B" and point "A" of the passage zone 1 is termed as an image taking target area 4.

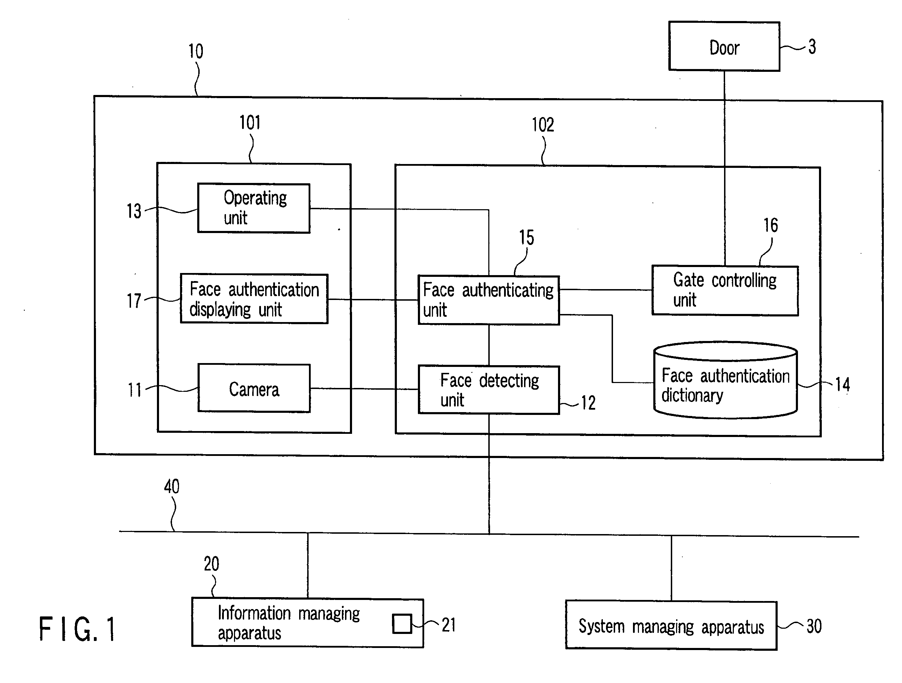

FIG. 1 generally shows a structure of the face authenticating system to which a face authenticating apparatus according to the embodiment of the present invention is applied.

The face authenticating system includes a face authenticating apparatus 10, an information managing apparatus 20 and a system managing apparatus 30. The information managing apparatus 20 and the system managing apparatus 30 are connected to the face authenticating apparatus 10 via a network 40.

The face authenticating apparatus 10 includes a terminal unit 101 and a controlling unit 102.

The terminal unit 101 includes a video camera (hereinafter, merely called a camera) 11, an operating unit 13 and a face authentication displaying unit 17. The camera 11 is image taking unit. The camera 11 takes an image which includes at least the face of the pedestrian M. The operating unit 13 is operating unit for operating input operation for dictionary registration. The face authentication displaying unit 17 is displaying unit for sequentially displaying the state of face authentication and the like for the pedestrian M.

The controlling unit 102 includes a face detecting unit 12, a face authentication dictionary 14, a face authenticating unit 15 and a gate controlling unit 16.

The face detecting unit 12 is face detecting unit. The face detecting unit 12 detects a facial.area of the pedestrian M from the image which is taken by the camera 11. The face authentication dictionary 14 is dictionary storing unit. The face authentication dictionary 14 previously stores (registers) a plurality of dictionary information.

The face authenticating unit 15 is authenticating unit. The face authenticating unit 15 performs comparison between the image of the facial area which is obtained by the face detecting unit 12 and the dictionary information which is previously registered to the face authentication dictionary 14. In this manner, the face authenticating unit 15 determines whether or not the pedestrian M is a previously registered person.

Further, the face authentication dictionary 14 stores user IDs, passwords and the like in correspondence with the dictionary information.

The gate controlling unit 16 is gate controlling unit. The gate controlling unit 16 controls the door 3 based on the determination result of the face authenticating unit 15. Accordingly, in the case that the pedestrian M is determined to be a previously registered person by the face authenticating unit 15, the gate controlling unit 16 controls the door 3 to open.

In the following, each structural element is explained in detail.

For example, the face authenticating apparatus 10 has a main body of a stand-alone type, as shown in FIG. 3. The terminal unit 101 and the controlling unit 102 are disposed at the main body. The controlling unit 102 is disposed inside the main body.

For example, the face authenticating apparatus 10 according to an embodiment of the present invention is placed at the vicinity of the door 3, as shown in FIG. 2. The height from the ground to the camera 11 and the face authentication displaying unit 17 which are disposed at the terminal unit 101 of the face authenticating apparatus 10 is set to be about the average height of a pedestrian M. The camera 11 is placed at the position which is slightly lower than that of the face authentication displaying unit 17 so that the face authentication displaying unit 17 is not hidden by the camera 11.

As mentioned above, the face authentication displaying unit 17 is disposed at the terminal unit 101. The face authentication displaying unit 17 displays the current face authentication state and the like for the pedestrian M. After detecting the face of the pedestrian M, when the pedestrian M approaches at a specific distance from the door 3 or when the pedestrian M approaches the door 3, the face authentication displaying unit 17 displays a guidance message which shows that the entry is permitted for the pedestrian M. Namely, in the case that the pedestrian M approaches at the door 3 being closer than point "A" in FIG. 2, the face authenticating apparatus 10 determines whether or not the pedestrian M is a previously registered person based on the image which is obtained by the camera 11.

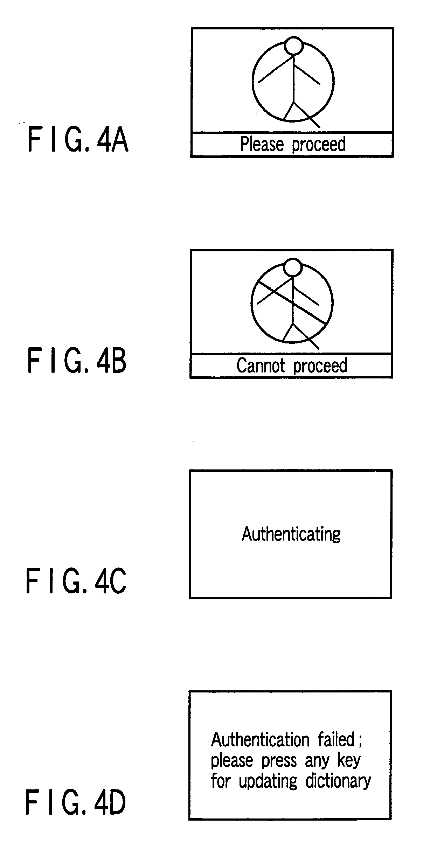

After the authentication is completed, the pedestrian M is determined to be a previously registered person, the face authenticating apparatus 10 displays a guidance message which shows that the entry is permitted as shown in FIG. 4A, for example. In the case that the pedestrian M is determined not to be a previously registered person, the face authenticating apparatus 10 displays a guidance message which shows that the entry is rejected as shown in FIG. 4B, for example.

As mentioned above, the operating unit 13 is disposed at the terminal unit 101. In the present embodiment, the operating unit 13 is structured with a touch panel which is placed on the face authentication displaying unit 17. The operating unit 13 is utilized when the pedestrian M performs authentication operation while standing in front of the face authentication displaying unit 17. Further, the operating unit 13 is utilized for inputting an ID number, a password and the like with the operation for the dictionary registration.

In the case that the face authentication is unsuccessful before the pedestrian M approaches the door 3, it is necessary for the pedestrian M to perform operation while standing in front of the face authentication displaying unit 17. Accordingly, the face authenticating apparatus 10 obtains once again the facial image of the pedestrian M who is standing in front of the face authentication displaying unit 17 and performs detailed authentication.

As mentioned above, the camera 11 is disposed at the terminal unit 101. The camera 11 takes a facial image of the pedestrian M. Specifically, when the pedestrian M looks at the face authentication displaying unit 17, the front view of the facial image is taken by the camera 11.

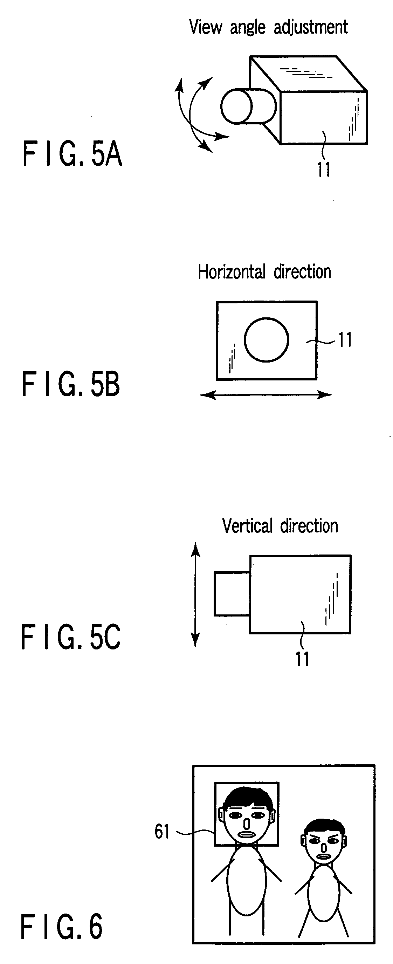

Further, as shown in FIG. 5A, FIG. 5B and FIG. 5C, the camera 11 is installed in the terminal unit 101 so that the view angle (in the horizontal direction and the vertical direction) is adjustable on manual operation. Accordingly, the camera 11 can take a facial image without depending on the installation conditions and the height of the person who is the authentication target.

The face detecting unit 12 detects an area where a face of a person exists in the image which is obtained from the camera 11. For example, the face detecting unit 12 can performs the detection process of the facial area with a method which is described in the document ("Proposal of space difference probability template applicable for comparison of images which include slight difference", Mita, Kaneko, Hori, The Ninth Image Sensing Symposium Proceedings,SSII03, 2003). With this method, a dictionary pattern for detection is previously prepared from a facial learning pattern and a pattern which has high similarity degree with the dictionary pattern is searched from the inputted image.

A specific detection example of a facial area is shown in FIG. 6. FIG. 6 is a diagram which shows an image inputted from the camera 11. As shown in FIG. 6, the facial area which is detected by the face detecting unit 12 is displayed being specified with a frame 61.

Further, in the case that a person is detected to exist in the image taking target area 4, namely, in the case that the facial area is detected by the face detecting unit 12, the camera takes one image shot. In this manner, the camera 11 obtains the image in the view angle which includes the detected facial area.

The face authenticating unit 15 determines whether or not the image in the facial area which is detected by the face detecting unit 12 is previously registered. Specifically, as disclosed in Jpn. Pat. Appln. KOKAI Publication No. 2001-266152 for example, the face authentication dictionary 14 previously prepares a facial image of a registrant (a pedestrian) and stores (registers) the inherent feature information which is extracted from the facial image as the dictionary information. The face authenticating unit 15 performs comparison between the image (the feature information) of the facial area which is selected by the face detecting unit 12 and the dictionary information which is previously registered at the face authentication dictionary 14 and acquires the similarity degree therebetween.

In the case that the acquired similarity degree is equal to or more than a previously specified threshold value, the face authenticating unit 15 determines that the pedestrian M is a person who is previously registered (a registrant). On the other hand, in the case that the acquired similarity degree is less than the threshold value, the face authenticating unit 15 determines that the pedestrian M is not a person who is previously registered (a non-registrant).

For example, in the case that the object to be controlled by the gate controlling unit 16 is the door 3 as shown in FIG. 2, the gate controlling unit 16 controls the door 3 in accordance with the authentication result of the face authenticating unit 15. Namely, the gate controlling unit 16 performs releasing when the authentication result of the face authenticating unit 15 is OK (a registrant).

For example, in the case that the object to be controlled by the gate controlling unit 16 is a gate mechanism, the gate controlling unit 16 controls the gate mechanism in accordance with the authentication result of the face authenticating unit 15. Namely, when the gate controlling unit 16 detects a person who is trying to pass the gate although the authentication result of the face authenticating unit 16 is NG (a non-registrant), the gate controlling unit 16 performs the control to sound an alert or to close a flapper which is installed to the gate mechanism. In this manner, the gate controlling unit 16 prevents the non-registrant from passing through the gate.

The information managing apparatus 20 functions as information managing unit. As shown in FIG. 1, the information managing apparatus 20 has a storing unit 21. For example, the storing unit 21 stores information which is copied from the contents of the face authentication dictionary 14, history information, system setting information and the like.

For example, the history information includes face authentication results, open-close states of the door 3, operation details etc. of the operating unit 13, suspicious person recognizing images and the like. For example, the system setting information includes a variety of information which is necessary for the system operation, information of setting details and the like.

The suspicious person recognizing image is the image for recognizing whether or not a suspicious person exists. In the case that a person is detected to exist in the image taking target area 4, namely, in the case that the facial area is detected by the face detecting unit 12, the camera takes one image shot. In this manner, the camera 11 takes an image of a person who has been in the vicinity when the door 3 is opened. Namely, it is possible to take an image of a person who has the possibility of entering the access target area 2 without receiving the authentication of the face authenticating system.

The face authenticating apparatus 10 transmits the image which is taken at that time to the information controlling apparatus 20 as a suspicious person recognizing image. The information controlling apparatus 20 stores the received suspicious person recognizing image at the storing unit 21. Namely, the storing unit 21 functions as image storing unit.

An administrator of the face authenticating system can recognize the passing history, the suspicious person recognizing image and the like by referring to the information at the storing unit 21 of the information managing apparatus 20 from the system managing apparatus 30. Accordingly, when a suspicious passing occurs, the administrator can specify the suspicious person by recognizing the suspicious person recognizing image which is stored in the storing unit 21 of the information managing apparatus 20 from the system managing apparatus 30.

The system managing apparatus 30 functions as system managing unit. The system managing apparatus 30 has displaying unit of the face authentication result, searching and displaying unit of the history information which is stored in the information managing apparatus 20, operational input unit for receiving operation from the administrator, and unit for transmitting a remote releasing signal (a remote open-close controlling signal) of the door 3 to the gate controlling unit 16 of the face authenticating apparatus 10 and the like.

Here, the face authenticating system according to an embodiment of the present invention has a feature that a plurality of face authenticating apparatuses 10 are possible to be connected to each of one information managing apparatus 20 and one system managing apparatus 30.

Further, it is possible to operate the face authenticating apparatus 10 separately. Namely, the face authenticating system according to an embodiment of the present invention does not need to have an information managing apparatus 20 and a system managing apparatus 30. For example, in case a problem occurs at the network 40, the face authenticating apparatus 10 can operate normally.

In addition, the media, hard discs etc. for example, to which the face authentication dictionary 14 and the face authenticating unit 15 etc. in the controlling unit 102 are stored, are duplexed. Accordingly, even when a problem occurs at one hard disc, the face authenticating apparatus 10 can normally operate with the other hard disc. Namely, it is considered that the operation is possible even when a problem occurs.

Next, the flow of the overall process with the abovementioned structure is explained.

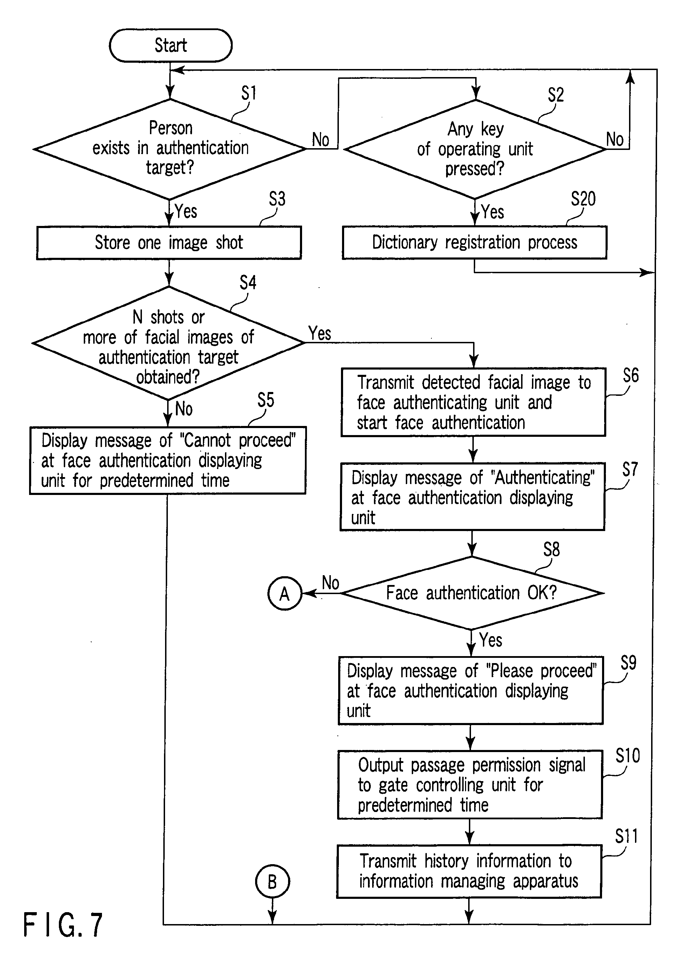

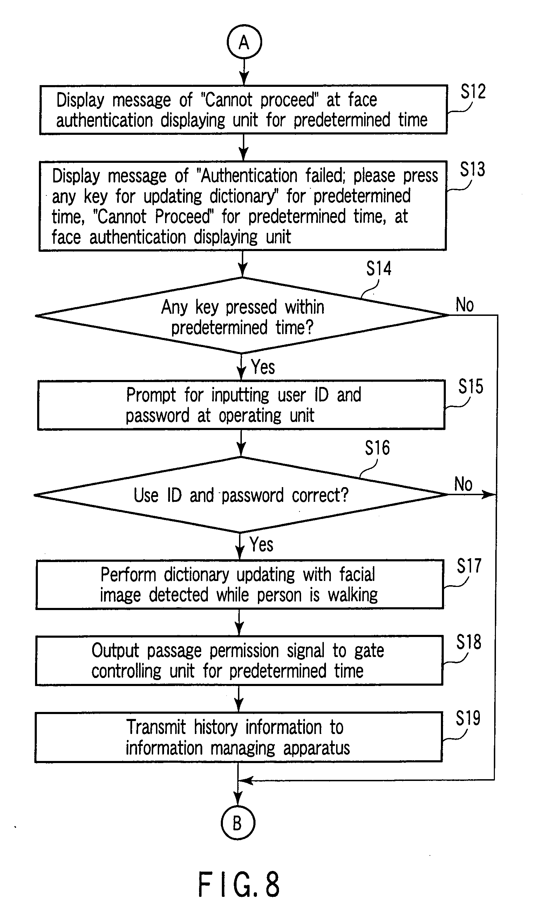

FIG. 7 and FIG. 8 are flowcharts for explaining processes with the face authenticating apparatus 10 according to an embodiment of the present invention. Here, the processes explained in the following are mainly performed at the face authenticating unit 15. Further, the camera 11 is considered to continuously take images of the image taking target area.

The face authenticating unit 15 performs detecting process of the facial area by the face detecting unit 12 based on the image obtained by the camera 11. The face authenticating unit 15 checks whether or not a person who is the authentication target (a pedestrian M) exists based on the face detection result of the face detecting unit 12 (Step S1). Accordingly, when the facial area is detected by the face detecting unit 12, the face authenticating unit 15 determines that the pedestrian M exists.

When the pedestrian M is determined not to exist (NO in Step S1), the face authenticating unit 15 checks whether or not a key of the operating unit 13 is operated (Step S2). When the key of the operating unit 13 is determined not to have been operated, the face authenticating unit 15 returns to Step S1 and repeats the abovementioned procedure.

In the case that the pedestrian M who is the authentication target is determined to exist in Step S1 (YES in Step S1), the face authenticating unit 15 obtains one image shot with the camera 11 in the view angle which includes the detected facial area (Step S3). The face authenticating unit 15 transmits the image which is taken at that time to the information controlling apparatus 20 as a suspicious person recognizing image.

The face authenticating unit 15 determines whether or not a specific number of shots (N shots) or more of the facial images of the pedestrian M which is detected by the face detecting unit 12 are obtained (Step S4). To perform the face authentication, the face authenticating apparatus 10 according to the embodiment of the present invention generates a feature amount for the authentication by combining feature amounts of a plurality of the facial images. Therefore, the specific number of shots or more of the facial images are needed for the face authentication process. Here, the minimum shots for performing the face authentication process are N shots.

In the case that the specific number of shots or more of the facial images are determined not to be obtained in Step S4 (NO in Step S4), the face authenticating unit 15 displays at the face authentication displaying unit 17, a message which indicates that the authentication has failed (Step S5). The face authenticating unit 15 returns to Step S1 and repeats the abovementioned procedure.

In the case that the specific number of shots or more of the facial images are determined to be obtained in Step S4 (YES in Step S4), the face authenticating unit 15 receives the images of the facial area (the facial images) which is detected by the face detecting unit 12 and starts the face authentication process (Step S6). As shown in FIG. 4C, when the face authentication process starts, the face authenticating unit 15 displays a message of "Authenticating" at the face authentication displaying unit 17, for example (Step S7). The display of the message continues until the face authentication process ends.

When the face authentication process ends, the face authenticating unit 15 checks whether the authentication result is successful (OK) or unsuccessful (NG) (Step S8). As shown in FIG. 4A, when the authentication result is successful (OK) (YES in Step S8), the face authenticating unit 15 displays a message of "Please proceed" at the face authentication displaying unit 17, for example (Step S9). In addition, the face authenticating unit 15 outputs a passage permission signal for a predetermined time to the gate controlling unit 16, which indicates that the passage is permitted (Step S10). When the gate controlling unit 16 receives the passage permission signal, the gate controlling unit 16 opens the door 3. In this manner, the pedestrian M can pass through the door 3. Here, when the passage permission signal is no longer detected, the gate controlling unit 16 closes the door 3.

The face authenticating unit 15 transmits the authentication result and the information indicating the open-close state of the door 3 to the information managing apparatus 20 as the history information (Step S11). The face authenticating unit 15 returns to Step S1 and repeats the abovementioned procedure.

As shown in FIG. 4B, when the authentication result is unsuccessful (NG) in Step S8 (NO in Step S8), the authenticating unit 15 displays a message of "Cannot proceed" at the face authentication displaying unit 17 for a predetermined time, for example (Step S12).

As shown in FIG. 4D, the face authenticating unit 15 displays a message prompting the pedestrian M for key input at the face authentication displaying unit 17 for a predetermined time (Step S13). That is, the face authenticating unit 15 displays a message of "Authentication failed; please press any key for updating dictionary" at the face authentication displaying unit 17 for the predetermined time. When a key of the operating unit 13 is not pressed within the predetermined time, namely, while the message is displayed (NO in Step S14), the face authenticating unit 15 returns to Step S1 and repeats the procedure.

When a key of the operating unit 13 is pressed within the predetermined time (YES in Step S14), the face authenticating unit 15 displays a guidance message for inputting a user ID and a password at the face authentication displaying unit 17 (Step S15). Accordingly, the face authenticating unit 15 and the face authentication displaying unit 17 function as guiding unit. In this manner, the face authenticating unit 15 makes the pedestrian M perform the operation for the authentication, such as inputting the user ID and password.

In the case that the user ID and password are inputted, the face authenticating unit 15 determines whether or not the inputted user ID and password match with the previously registered user ID and password (Step S16).

Namely, the face authenticating unit 15 determines whether or not the inputted user ID and password match with the user ID and password which are registered and stored in the face authentication dictionary 14. In this manner, the face authenticating unit 15 checks whether or not the user ID and password are correct. When the user ID and password are determined to be incorrect (NO in Step S16), the face authenticating unit 15 returns to Step S1 and repeats the abovementioned procedure.

When the inputted user ID and password are determined to be correct in Step S16 (YES in Step S16), the face authenticating unit 15 performs a registration process to update the dictionary information with the facial image which is detected before the pedestrian M approaches the door 3 (Step S17).

Accordingly, the face authenticating unit 15 newly calculates the feature information based on the facial image which is detected before the pedestrian M approaches the door 3 and the dictionary information which is stored in the face authentication dictionary 14. The face authenticating unit 15 writes the calculated feature information in the face authentication dictionary 14 as the dictionary information. The face authenticating unit 15 functions as dictionary registering unit.

The face authenticating unit 15 displays a message which indicates that passage is permitted at the face authentication displaying unit 17 and outputs the passage permission signal which indicates that the passage is permitted to the gate controlling unit 16 for a predetermined time (Step S18).

The face authenticating unit 15 transmits the result of the registration process which is performed in Step S17 to the information managing apparatus 20 as the history information (Step S19). The face authenticating unit 15 returns to Step S1 and repeats the abovementioned procedure.

In Step S2, when a key of the operating unit 13 is pressed, the registration process of the dictionary information is performed (Step S20). Specifically, the pedestrian M walks in the image taking target area 4 from point "B" to point "A" after performing specific key operation. The face authenticating apparatus 10 obtains a facial image of the pedestrian M who walks in the image taking target area 4 from point "B" to point "A" and newly performs the dictionary registration. In this manner, new dictionary information can be registered while the present system is operated.

As mentioned above, the face authenticating apparatus 10 according to the embodiment of the present invention obtains a facial image of the pedestrian M before the pedestrian M approaches the camera 11. The face authenticating unit 10 performs the face authentication based on the obtained image and the feature information which is previously stored as the dictionary information. When the face authentication is unsuccessful, the face authenticating apparatus 10 receives operational input from the pedestrian M by prompting the pedestrian M to operate the operating unit 13 which is installed at the vicinity of the door 3.

The face authenticating apparatus 10 performs the authentication of the pedestrian M based on the inputted operational input. When the authentication result is OK, the face authenticating apparatus 10 performs the registration or the updating of the dictionary information based on the facial image which is obtained before the pedestrian M approaches the door 3.

In this manner, the face authenticating apparatus 10 can perform the face authentication even in the condition that the pedestrian M is walking. In addition, when the authentication is unsuccessful, since the dictionary information is updated based on the feature information in the actually operated state, the face authenticating apparatus 10 can improve the accuracy of the face authentication. As a result, a face authenticating apparatus, a face authenticating method and a face authenticating system which can greatly improve user's convenience can be provided.

Further, the face authenticating apparatus 10 stores the image in which a person is detected as the history. Accordingly, the face authenticating apparatus 10 keeps the image of a person who has been in the vicinity when the face authentication is performed as the history. The administrator can recognize the person who has the possibility of entering the access target area without receiving the face authentication by referring to the history.

Here, the invention is not limited to the abovementioned embodiment as it is. In the practical stage, the structural elements can be actualized with modifications within the scope which does not depart form the concept. Further, various invention can be formed with appropriate combination of a plurality of structural elements which are disclosed in the abovementioned embodiments. For example, some of the structural elements can be deleted from the whole structural elements which are disclosed in the embodiments. Further, the structural elements from different embodiments can be appropriately combined.

Although the face authenticating apparatus 10 of the abovementioned embodiment is explained to have the terminal unit 101 and the controlling unit 102, it is not limited to this structure. For example, the terminal unit 101 and the controlling unit 102 can be disposed separately.

Since the controlling unit 102 has a large capacity storing unit, a CPU and the like, the size becomes large. In the case that the terminal unit 101 and the controlling unit 102 are integrally structured, the controlling unit 102 is accommodated in the main body which supports the terminal unit 101. However, by installing the terminal unit 101 and the controlling unit 102 separately, the face authenticating apparatus 10 can be downsized. In this manner, for example, the face authenticating apparatus 10 can be actualized as a wall hanging type.

## Claims

1. A face authenticating apparatus **characterized by** comprising:
dictionary storing unit (14) for previously storing dictionary information;
operating unit (13) for receiving operational input;
image taking unit (11) for taking an image including at least a face of a person;
face detecting unit (12) for detecting a facial area of the person from the image which is taken by the image taking unit;
authenticating unit (15) for determining whether or not the person is a previously registered person based on the image of the facial area which is detected by the face detecting unit and the dictionary information which is stored in the dictionary storing unit; and
dictionary registering unit (15) for performing registration or updating of the dictionary information which is stored in the dictionary storing unit based on the facial image of the person who is detected by the face detecting unit in the case that the person is determined not to be the previously registered person by the authenticating unit and specific operational input is performed by the operating unit.

2. The face authenticating apparatus according to claim 1, **characterized by** further comprising:
display unit (17) for displaying various information including a face authentication state; and
guiding unit (15, 17) for displaying with the displaying unit so as to prompt the person to perform operation for the authentication with the operating unit in the case that the person is determined not to be the previously registered person by the authenticating unit.

3. A face authenticating method of the face authenticating apparatus which comprises dictionary storing unit for previously storing dictionary information and operating unit for receiving operational input, the method **characterized by** comprising:
taking an image including at least a face of a person;
detecting a facial area of the person from the taken image;
determining whether or not the person is a previously registered person based on the image of the detected facial area and the dictionary information which is stored in the dictionary storing unit; and
performing registration or updating of the dictionary information which is stored in the dictionary storing unit based on the facial image of the detected person in the case that the person is determined not to be the previously registered person and specific operational input is performed by the operating unit.

4. A face authenticating system **characterized by** comprising:
a face authenticating apparatus (10) which performs face authentication; and
an information managing apparatus (20) and a system managing apparatus (30) which are connected to the face authenticating apparatus via a network;
wherein the face authenticating apparatus comprises dictionary storing unit for previously storing dictionary information, operating unit for receiving operational input, image taking unit for taking an image including at least a face of a person, face detecting unit for detecting a facial area of the person from the image which is taken by the image taking unit, authenticating unit for determining whether or not the person is a previously registered person based on the image of the facial area which is detected by the face detecting unit and the dictionary information which is stored in the dictionary storing unit, dictionary registering unit for performing registration or updating of the dictionary information which is stored in the dictionary storing unit based on the facial image of the person who is detected by the face detecting unit in the case that the person is determined not to be the previously registered person by the authenticating unit and specific operational input is performed by the operating unit, and gate controlling unit (16) for controlling open-close of a gate for entrance and exit disposed at an access target area based on the determination result of the authenticating unit;
wherein the information managing apparatus comprises information managing unit (20) for storing the determination result of the authenticating unit, the image utilized for the face authentication, the processing result of the dictionary registering unit and the control result of the gate controlling unit, as history information; and
wherein the system managing apparatus comprises system managing unit (30) for performing searching and outputting of the history information stored in the information managing unit and transmitting of a remote open-close controlling signal of the gate for entrance and exit to the gate controlling unit.

5. The face authenticating system according to claim 4, **characterized in that** the information managing unit further comprises image storing unit (21) for storing an image; the image taking unit takes a suspicious person recognizing image when a facial area is detected by the face detecting unit; the authenticating unit transmits the suspicious person recognizing image which is taken by the image taking unit to the information managing unit; and the information managing unit stores the received suspicious person recognizing image by the image storing unit.
